# EUROPEAN PATENT SPECIFICATION

(11) **EP 2 152 615 B1**
(45) Date of publication and mention of the grant of the patent: **27.09.2017**
(21) Application number: 08779364.2
(22) Date of filing: 09.06.2008
(51) Int. Cl.: A01C 7/12, B65G 53/46, A01C 7/20

(54) **ROTOR FOR AN OUTFEED HOUSE AT A SOWING MACHINE**
ROTOR FÜR DAS AUSSENGEHÄUSE EINER SAATMASCHINE
ROTOR POUR ÉQUIPEMENT DE DISTRIBUTION SUR UNE MACHINE À SEMER

(30) Priority: 06.06.2007 SE 0701415
(43) Date of publication of application: 17.02.2010
(73) Proprietor: Väderstad Holding AB, 590 21 Väderstad (SE)
(72) Inventor: RYDMARK, Niclas, S-595 53 Mjölby (SE)
(74) Representative: Lettström, Richard Wilhelm
(86) International application number: PCT/SE2008/050682
(87) International publication number: WO 2008/150241

(56) References cited:
- EP-B1- 0 833 557
- WO-A2-2004/083085
- WO-A2-2004/083085
- DE-A1- 3 337 514
- DE-A1- 3 609 994
- DE-C- 84 217
- JP-A- 9 107 733
- JP-A- 2004 051 251
- US-A- 1 253 688

## Description

The invention refers to a rotor for a metering house at a seed drill according to the ingress of Claim 1.

### TECHNICAL AREA

Central metering systems where a metering house meters out seed, fertiliser, crop protection chemicals or other granulated material in an airstream that is then conducted to one or more distributor heads have been commonly available on seed drills since the 1970s. Farmers can sow practically all relevant crops with seed drills equipped with this type of metering house. Driving of these metering houses has traditionally occurred with a mechanical drivewheel that rolls on the soil and the power is then transferred via a transmission most commonly via one or more chains. A soil-driven metering is very functional since it automatically increases or decreases the metering when the farmer changes speed. In recent years demands have arisen for the farmer to be able to increase and decrease the metered amount per unit area, most often specified as kg/ha, during sowing. This is difficult to solve mechanically and therefore hydraulic or electric driving of metering houses has become increasingly relevant. A metering house with rotor according to the ingress of Claim 1 is shown in EP-A-0833557. Other similar metering houses with rotor are shown in US-A-5189965 and WO 92/12619. Systems exist where the metering is varied according to a previously programmed schedule, which with the help of GPS is automatically followed by the machine. One problem however is that the rotors can lock during sowing of certain types of peas and beans. These seeds are large, approx. 10 mm in diameter, and can be very irregular. In addition, these seeds can pack down and make it almost impossible to start the metering house. This problem has previously been solved by the front wall of the metering house being made flexible. When the peas pack down, which they can do particularly tightly over long transport distances, the front wall has been able to flex and the rotor has been able to start rotating. In mechanical and hydraulic drive there is a large torque available, which means that the rotor can be started with a certain amount of force and the peas can even be crushed in the starting instant. In electrical drive there is not the same torque available since it is expensive to design motor and connections for the power that can be required. At the rotor in WO 2004083085 and DE-A-3609994 the boundary edges of the dosing chambers have been made wholly or partly flexible. Changing rotors is however a complicated procedure with both these rotors.

### AIM OF THE INVENTION

The aim of the invention is to provide a rotor for a metering house at a seed drill, through which the mentioned problems are minimised and which is elegantly, unobtrusively and in general without cost achieved by the above invention.

### SUMMARY OF THE INVENTION

The aim is achieved through a device according to the characterising part of Claim 1.

The sub-claims refer to advantageous embodiments of the invention.

Through making the rotor in such a way that its diameter increases with increasing moment the pea locking can generally be partly or completely avoided and the rotor becomes practically or wholly locking-free. The outer part of the rotor is suitably made of a somewhat flexible (semi-hard) material. The rotor has a construction where a carrier core has axial grooves and the rotor has corresponding axially directed cams, which engage in the rotor along its length. This means that when the core of the rotor rotates and the rotor is prevented from turning, the axial cams are angled and the diameter decreases somewhat. By making the rotor and core symmetrical the same rotor can be used for rotation both to the right and to the left. This is an important advantage since the house can be mounted on the machines in right and left embodiments for the greatest possible user friendliness. It is the task of the specialist to choose wall thicknesses and materials that optimise the function.

### DRAWING SUMMARY

The invention is described more closely below with reference to the attached drawings, which show preferred examples of embodiments.
Figure 1 shows a perspective view of a metering house at an agricultural machine with a rotor according to the invention.
Figure 2 shows a sectioned perspective view from above of the metering house in Fig. 1.
Figure 3 shows a cross-section of the rotor in Fig. 1 mounted on a hub.
Figure 4 shows a view similar to that in Fig. 3, where the rotor is under load.

### DESCRIPTION OF PREFERRED EMBODIMENTS

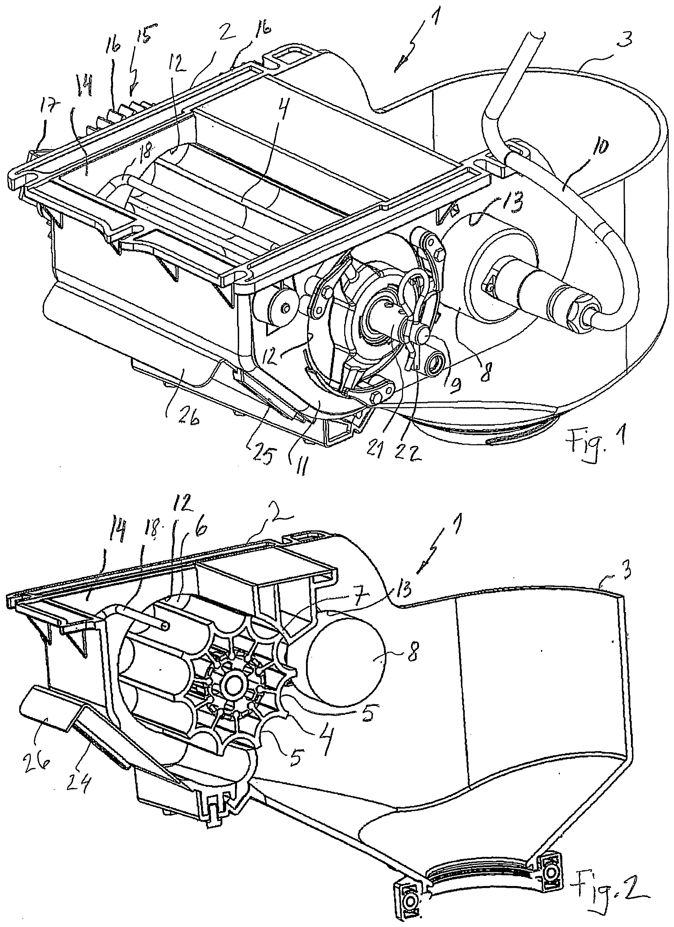

Figs. 1 and 2 show a metering house 1, which is intended to be mounted at the base of a not shown container for seed or other granular material, below called seed. The metering house 1 comprises a house 2 and an at the house fastened connecting branch 3 (s.c. ejector section of the metering house 1) for connection to a pipe for pneumatic transport of seed to the distributors of the seed drill. The seed is dosed by means of a rotor 4 according to the invention, which along its periphery has preferably semicylindrical shaped depressions 5, which with the circle-shaped ridges of the rotor and the inner wall of the house facing the rotor 4 form at 7 chambers for dosing of seed. A motor 8 for driving the rotor 4 is mounted in the house 2 with its drive axle mainly parallel to the centre axle 9 of the rotor. An electric cable 10 is connected to the motor 8 for its operation. In one of the side gables 11 of the house 2 holes 12 and 13 are provided for mounting of the motor 8 and the rotor 4. Additional holes 12 and 13 with corresponding diameter are provided in the opposite side gable 14 of the house 2. In this way both the motor 8 and the rotor 4 can be inserted and mounted from either gable wall 11 or 14. The motor 8 and the rotor 4 are co-coupled by means of a cogged gearing 15 with cogwheels 16. At one of the cogwheels of the cogged gearing 15, which is connected with the rotor 4, a partly shown arm 17 is jointedly mounted so as to provide an upward- and downward-going movement around a point of rotation. The arm is linked to a U-shaped, journalled in bearings in the gables of the house 2, stirrer 18 which advantageously executes a forward and return rotational movement in order to counteract clogging of seed at the rotor 4. The drive axle of the motor 8 is non-rotatably connected with at least one cogwheel in the cogged gearing 15. The rotor 4 comprises an outer dosing part 19 of elastic material, for example a rubber, and a hub part 20 of rigid material, for example a metal or a hard plastic. The hub part 20 of the rotor 4 is fixedly mounted on a pipe-shaped axle 21, which is threaded onto the rotor's central axle 9, which is non-rotatably connected with at least one cogwheel in the cogged gearing 15. A lock-pin 22 is inserted through a hole in the centre axle 21 for locking fast the rotor 4 in the house 2. This arrangement is adapted so as to allow the rotor 4 to be exchanged for a rotor with a different dosing or so as to clean around the rotor.

On the side 23 of the house 2 opposite the branch pipe 3 there is an opening, on the corresponding side of which grooves 24,25 are arranged so as to receive an emptying hatch 26 for emptying of seed at exchange of the rotor or for cleaning.

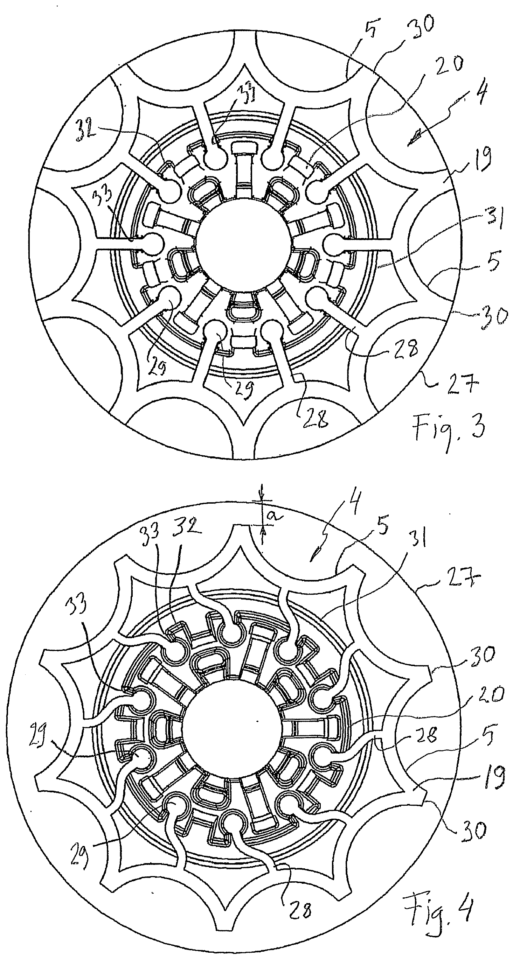

In Figs. 3 and 4 the rotor 4 is shown drawn on a larger scale within a conceptual circle 27, where the radius of the circles is equal in Figs. 3 and 4. The dosing part 19 of the rotor 4 consists of the preferably half-cylindrical shaped depressions 5 and from a place at the opposite side of the depressions there radially extend inwards bars 28, which at their outer end have elongated fixing ribs 29 with a diameter that is greater than the thickness of the bars 28. The recesses 5 meet each other at the outer edges 30, which in the normal position (without load) lie along the conceptual circle 27. The dosing part is preferably jet-moulded or cast in one piece.

The hub part 20 consists of outer, detachable gables 31 connected via an intermediate cylindrical part 32, which has elongated recesses 33, the cross-sectional shape of which corresponds to the cross-sectional shape of the bars 28 and the fixing ribs 29 on the dosing part 19. The dosing part 19 is mounted on the hub part 20 through removing one of the gables 31 and thereafter inserting the bars 28 and the fixing ribs 29 into the recesses 33 from one end of the cylindrical part 32, after which the gable is reattached. The hub part 20 is preferably extruded in one piece. The dosing part 19 has at least one elastic bar 28 extending in the longitudinal direction of the rotor and inwards. Each bar is adapted to be received and held in a recess 33 in the hub part 20.

Figs. 3 and 4 show ten recesses 33 and an equal number of bars 28. These numbers can naturally be varied within the framework of the claims and there do not have to be equal numbers of recesses 33 and bars 28. However the upper circumference of the bars 28 should be mainly equally distributed so that the function during rotation according to Fig. 4 is similar over the periphery of the rotor 4.

In the event of a granule or aggregation of granules or other obstacle pressing against the periphery of the dosing part 19 at its rotation, for example at rotation of the rotor 4 past the wall 7 of the house 2 (see Fig. 2), the bars 28 are forced to bend as is shown in Fig. 4 while at the same time the diameter 4 of the rotor decreases a distance a in relation to the conceptual circle 27. When the obstacle has passed or broken up the diameter of the rotor 4 returns to the original through the elasticity in the material of the dosing part 19, as is shown in Fig. 3. In reality, the diameter decreases in the dosing part 19 around the place where the torque arose due to the properties of the material. If braking were to arise at several places simultaneously a decrease in the diameter occurs at least at these places. At braking at most places the diameter of the rotor along the entire circumference can generally decrease as is shown in Fig. 4. The material in the dosing part 19 of the rotor 4 must be chosen with care so that the right properties are obtained. It is important therein that a certain rigidity occurs and an ability to rapidly return to its original shape at twisting according to Fig. 4. At the same time the material must be durable and be able to withstand many twistings without losing its original shape.

The invention can be varied in a number of different ways within the framework of the attached claims, although the embodiments described above are to be preferred. For example, the shape of the preferably half-cylindrical shaped depressions 5 can be different than that shown in the drawings. The bars can instead be arranged on the hub and the retaining recesses, which receive the ends of the bars, can be arranged on the dosing part.

## Claims

1. Rotor for a metering house (1) at a seed drill for sowing of seed or other granular material, which metering house comprises a house (2) and a within this house controllably driven rotor (4) for dosing of seed, wherein means (28, 29, 33) are arranged so as at increased torque in at least one place along the periphery of the rotor to decrease the outer diameter of the rotor (4) at least in this place, said rotor (4) being divided into two concentrically mounted parts, an outer dosing part (19) and an inner hub part (20), where the dosing part is adapted to enclose the hub part, said dosing part (19) having in the circumferential direction generally uniformly distributed depressions (5) for dosing of the seed, **characterised in that** said outer peripheral part of the rotor being connected with its hub by means of at least one elastic bar (28) extending in the longitudinal direction of the rotor and inwards to the hub, each said bar (28) having at its inner end an elongated fixing rib (29), wherein each fixing rib is adapted to be received in an elongated recess (33) of corresponding shape in the hub part (20).

2. Rotor according to Claim 1, **characterised in that** said recesses (33) in the hub part are generally uniformly distributed in the circumferential direction of the hub part (20).

3. Rotor according to Claim 1 or 2, **characterised in that** the decrease in the outer diameter of the rotor is similar when the rotor is braked in the opposite direction of rotation.

4. Rotor according to any one of Claims 1 - 3, **characterised in that** the rotor is divided into two concentrically mounted parts, the outer dosing part (19) and the inner hub part (20), where the dosing part is adapted to enclose the hub part.

5. Rotor according to any one of Claims 1 - 4, **characterised in that** the dosing part (19) is made of an elastic material.

6. Rotor according to any one of Claims 1 - 5, **characterised in that** the hub part (20) is made of a rigid material.

7. Rotor according to any one of Claims 1 - 5, **characterised in that** the hub part (20) is made of an elastic material of such a degree of stiffness that said bars (28) are adapted to be retained in the recesses (33) even at relatively high load on the ribs.

8. Rotor according to any one of Claims 1 - 7, **characterised in that** said means comprises said bars (28) being adapted to bend at increased torque in the direction of rotation of the rotor (4).

## Patentansprüche

1. Rotor für ein Dosiergehäuse (1) einer Sämaschine zu aussäen von Samen oder anderem körnigen Material, wobei das Dosiergehäuse ein Gehäuse (2) und einen darin angeordneten, steuerbar angetriebenen Rotor (4) zur Dosierung der Samen umfasst, wobei Mittel (28, 29, 33) angeordnet sind, um, bei erhöhtem Drehmoment an wenigstens einer Stelle entlang des Randes des Rotors, den Außendurchmesser des Rotors (4) an wenigstens dieser Stelle zu verringern, wobei der Rotor (4) in zwei konzentrisch montierte Teile unterteilt ist, einen äußeren Dosierungsteil (19) und einem Inneren Nabenteil (20), wobei der Dosierungsteil angepasst ist, um den Nabenteil zu umschließen, wobei der Dosierungsteil (19) in der Umfangsrichtung im Allgemeinen gleichmäßig verteilte Vertiefungen (5) aufweist, zur Dosierung der Samen, **dadurch gekennzeichnet dass** der äußere Randteil des Rotors mit seiner Nabe mittels wenigstens einer elastischen Leiste (28) verbunden ist, die sich in Längsrichtung des Rotors und nach innen zu der Nabe erstreckt, wobei jede der Leisten (28) an ihrem Innenende eine längliche Fixierungsrippe (29) aufweist, wobei jede Fixierungsrippe angepasst ist, um in einer länglichen Aussparung (33) entsprechender Form in dem Nabenteil (20) aufgenommen zu werden.

2. Rotor gemäß Anspruch 1, **dadurch gekennzeichnet, dass** die Aussparungen (33) in dem Nabenteil im Allgemeinen gleichmäßig in der Umfangsrichtung des Nabenteils (20) verteilt sind.

3. Rotor gemäß Anspruch 1 oder 2, **dadurch gekennzeichnet, dass** die Abnahme des Außendurchmessers des Rotors ähnlich ist, wenn der Rotor in der entgegengesetzten Rotationsrichtung gebremst wird.

4. Rotor gemäß irgendeinem der Ansprüche 1-3, **dadurch gekennzeichnet, dass** der Rotor in zwei konzentrisch montierte Teile unterteilt ist, den äußeren Dosierungsteil (19) und den inneren Nabenteil (20), wobei der Dosierungsteil angepasst ist, um den Nabenteil zu umschließen.

5. Rotor gemäß irgendeinem der Ansprüche 1-4, **dadurch gekennzeichnet, dass** der Dosierungsteil (19) aus einem elastischen Material gefertigt ist.

6. Rotor gemäß irgendeinem der Ansprüche 1-5, **dadurch gekennzeichnet, dass** der Nabenteil (20) aus einem steifen Material gefertigt ist.

7. Rotor gemäß irgendeinem der Ansprüche 1-5, **dadurch gekennzeichnet, dass** der Nabenteil (20) aus einem elastischen Material mit einem solchen Steifheitsgrad gefertigt ist, dass die Leisten (28) angepasst sind, um in den Aussparungen (33), selbst bei relativ hoher Last auf den Rippen festgehalten zu werden.

8. Rotor gemäß irgendeinem der Ansprüche 1-7, **dadurch gekennzeichnet, dass** die Mittel die Leisten (28) umfassen, die angepasst sind, um bei erhöhtem Drehmoment in die Richtung der Rotation des Rotors (4) zu verbiegen.

## Revendications

1. Rotor pour un équipement de dosage (1) sur un semoir pour le semis de graines ou d'autres matériaux granulaires, lequel équipement de dosage comprend un boîtier (2) et, au sein de ce boîtier, un rotor (4) entraîné de manière commandée pour le dosage de semences, des moyens (28, 29, 33) étant agencés de manière à augmenter le couple dans au moins un emplacement le long de la périphérie du rotor pour diminuer le diamètre extérieur du rotor (4) au moins au niveau de cet emplacement, ledit rotor (4) étant divisé en deux parties montées concentriquement, une partie de dosage (19) extérieure et une partie de moyeu (20) interne, la partie de dosage étant adaptée pour entourer la partie de moyeu, ladite partie de dosage (19) présentant, dans la direction circonférentielle, des dépressions (5) réparties uniformément d'une façon générale, pour le dosage des graines, **caractérisé en ce que** ladite partie périphérique extérieure du rotor est reliée à son moyeu au moyen d'au moins une barre élastique (28) s'étendant dans la direction longitudinale du rotor et vers l'intérieur jusqu'au moyeu, chaque barre (28) comportant à son extrémité intérieure une nervure de fixation (29) allongée, chaque nervure de fixation étant adaptée pour être reçue dans un évidement allongé (33) de forme correspondante aménagé dans la partie de moyeu (20).

2. Rotor selon la revendication 1, **caractérisé en ce que** lesdits évidements (33) aménagés dans la partie de moyeu sont, d'une façon générale, uniformément répartis dans la direction circonférentielle de la partie de moyeu (20).

3. Rotor selon la revendication 1 ou la revendication 2, **caractérisé en ce que** la diminution du diamètre extérieur du rotor est similaire lorsque le rotor est freiné dans le sens de rotation opposé.

4. Rotor selon l'une quelconque des revendications 1 à 3, **caractérisé en ce que** le rotor est divisé en deux parties montées concentriquement, la partie de dosage (19) extérieure et la partie de moyeu (20) interne, la partie de dosage étant adaptée pour entourer la partie de moyeu.

5. Rotor selon l'une quelconque des revendications 1 à 4, **caractérisé en ce que** la partie doseuse (19) est constituée en un matériau élastique.

6. Rotor selon l'une quelconque des revendications 1 à 5, **caractérisé en ce que** la partie de moyeu (20) est constituée en un matériau rigide.

7. Rotor selon l'une quelconque des revendications 1 à 5, **caractérisé en ce que** la partie de moyeu (20) est constituée en un matériau élastique d'un degré de rigidité tel que lesdites barres (28) sont adaptées pour être retenues dans les évidements (33) même à une charge relativement élevée sur les nervures.

8. Rotor selon l'une quelconque des revendications 1 à 7, **caractérisé en ce que** lesdits moyens comprennent lesdites barres (28) adaptées pour être fléchies à un couple accru dans le sens de rotation du rotor (4).
